# EUROPÄISCHE PATENTSCHRIFT

(11) **EP 2 378 157 B1**
(45) Veröffentlichungstag und Bekanntmachung des Hinweises auf die Patenterteilung: **22.08.2012**
(21) Anmeldenummer: 10160150.8
(22) Anmeldetag: 16.04.2010
(51) Int. Cl.: F16F 15/08, G11B 33/08, G11B 33/12

(54) **Anordnung mit einer quaderförmigen schwingungs- und/oder stoßempfindlichen Komponente**
Assembly with a cuboid oscillation and/or impact sensitive component
Agencement doté d'un composant carré sensible à l'oscillation et/ou au choc

(43) Veröffentlichungstag der Anmeldung: 19.10.2011
(73) Patentinhaber: Siemens Aktiengesellschaft, 80333 München (DE)
(72) Erfinder: Krzoska, Andreas, 76149 Karlsruhe (DE)

(56) Entgegenhaltungen:
- EP-A1- 1 612 798
- DE-B3-102005 055 178
- DE-U1- 20 214 260
- GB-A- 912 536
- US-A- 4 358 098
- US-A- 4 713 714
- US-A- 5 240 222
- US-A- 5 491 608
- US-A- 6 078 498
- US-B1- 6 378 832
- US-B1- 6 567 265

## Beschreibung

Die Erfindung betrifft eine Anordnung mit einer im Wesentlichen quaderförmigen schwingungs- und/oder stoßempfindlichen Komponente und einer Tragplatte zur Aufnahme und Halterung der Komponente.

Eine derartige Anordnung ist aus der DE 10 2005 055 178 B3 bekannt. Zwischen einer Tragplatte und Aufnahmemittel einer quaderförmigen schwingungs- und/oder stoßempfindlichen Komponente in Form eines Speicherlaufwerks sind vertikal zur Tragplatte zweigeteilte elastische Elemente angeordnet, wobei jeweils abgebogene Laschen zwischen den beiden Teilen vorgesehen sind. Mittels derartiger Maßnahmen wird eine hohe Dämpfung des Speicherlaufwerks erzielt.

Eine weitere Anordnung mit den Merkmalen der Präambel von Anspruch 1 ist nach der US 656 72 65 B1 bekannt.

Der vorliegenden Erfindung liegt die Aufgabe zugrunde, eine Anordnung der eingangs genannten Art zu schaffen, mittels welcher ein im Wesentlichen gleiches Dämpfungsverhalten in unterschiedlichen Schwingungsrichtungen erzielt wird.

Diese Aufgabe wird dadurch gelöst,
- dass die Tragplatte an zwei gegenüberliegenden im Wesentlichen senkrecht zur Tragplatte angeordneten Seitenwänden jeweils zwei horizontal beabstandete Bohrungen aufweist,
- dass die Tragplatte ferner an ihren Ecken im Wesentlichen senkrecht zur Tragplatte angeordnete Fahnen aufweist, die jeweils mit einer weiteren Bohrung versehen sind, wobei jede Fahne mit einer der Seitenwände, die an die jeweilige Fahne angrenzt, einen Winkel bildet,
- dass an der Komponente elastische Elemente derart angeordnet sind, dass diese in die Bohrungen eingreifen.

Vorteilhaft ist, dass auch Schwingungen und Stöße während des Transports der auf der Tragplatte angeordneten Komponente um die Querachse der Komponente sehr gut gedämpft werden.

In einer Ausgestaltung der Erfindung ist vorgesehen, dass die Komponente mit zwei gegenüberliegenden Haltewänden versehen ist, die jeweils korrespondierend zu den Fahnen abgewinkelt und zum Befestigen elastischer Elemente vorgesehen sind. Mittels derartiger Maßnahmen können vorhandene Komponenten einfach mit elastischen Elementen nachgerüstet werden.

Eine weitere Ausgestaltung der Erfindung ergibt sich aus dem weiteren Unteranspruch.

Anhand der Zeichnung, in der ein Ausführungsbeispiel der Erfindung veranschaulicht ist, werden im Folgenden die Erfindung, deren Ausgestaltungen sowie Vorteile näher erläutert.

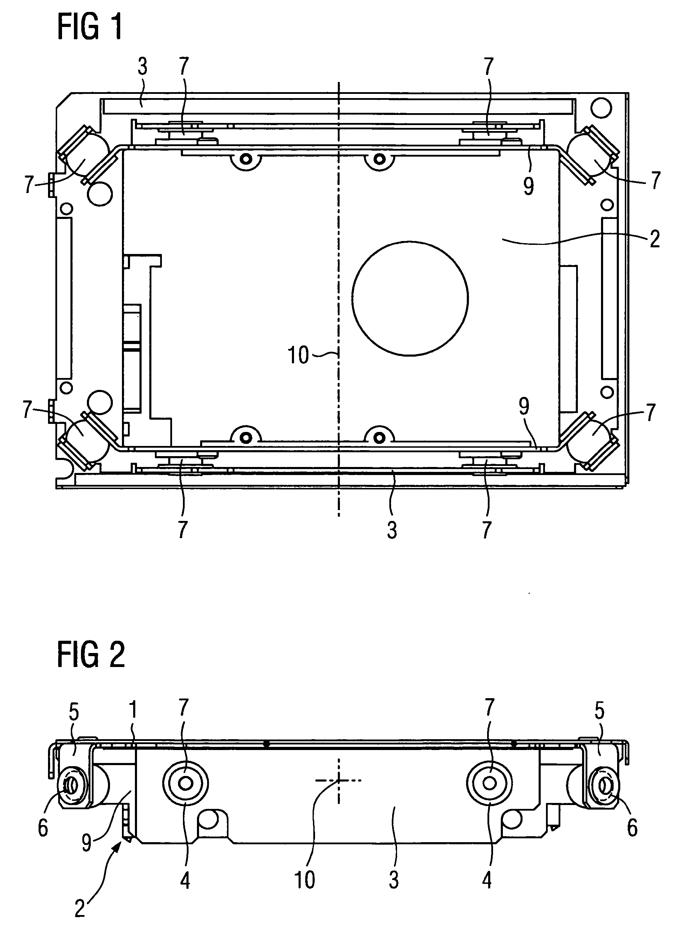

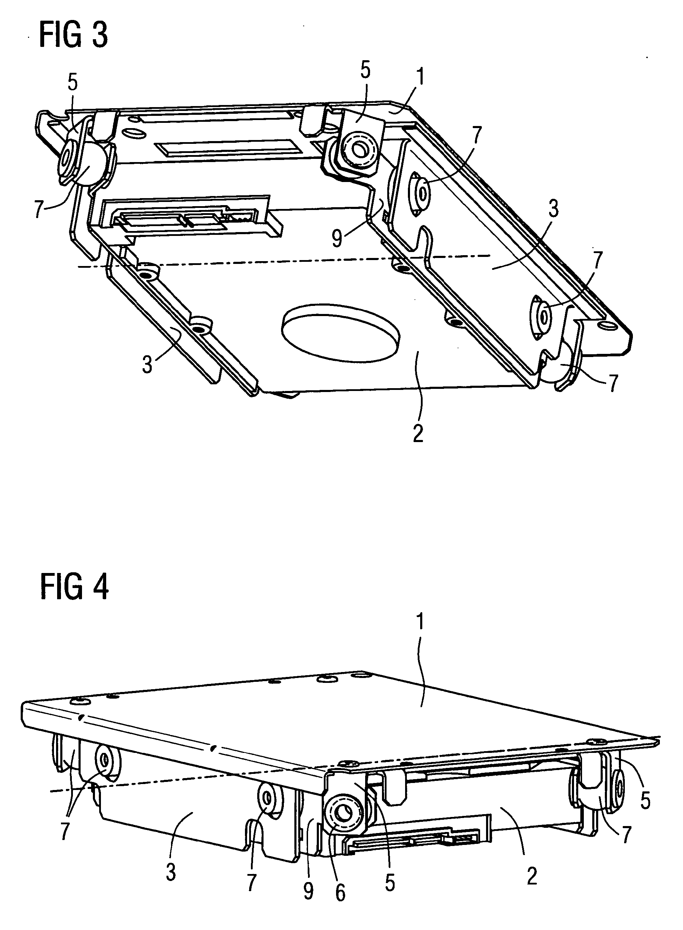

Figuren 1 bis 4 zeigen in perspektivischer Ansicht eine Anordnung mit einer schwingungs- und/oder stoßempfindlichen Komponente und einer Tragplatte.

Die in den Figuren 1 bis 4 gleichen Teile sind mit gleichen Bezugszeichen versehen.

Eine mit 1 bezeichnete Tragplatte ist zur Aufnahme und Halterung einer quaderförmigen schwingungs- und/oder stoßempfindlichen Komponente in Form eines Speicherlaufwerks 2 vorgesehen, wobei die Tragplatte 1 an zwei gegenüberliegenden vertikal angeordneten Seitenwänden 3 jeweils zwei horizontal beabstandete Bohrungen 4 aufweist. Ferner weist die Tragplatte 1 jeweils an ihren Ecken eine vertikal angeordnete und horizontal zur angrenzenden Seitenwand 3 abgewinkelte Fahne 5 auf, die mit einer weiteren Bohrung 6 versehen ist. Jede der Fahnen 5 ist derart zu ihrer jeweilig angrenzenden Seitenwand 3 abgewinkelt, dass die Winkel gleich sind und die Winkelhalbierenden benachbarter Winkel sich in einem Punkt schneiden. Mittels an dem Speicherlaufwerk 2 angeordneten elastischen Elementen 7 bzw. Dämpfungselementen ist das Speicherlaufwerk 2 schwingungsgedämpft an die Tragplatte 1 montiert, wobei diese Elemente 7 in die Bohrungen 4, 6 der Seitenwände 3 und der Fahnen 5 der Tragplatte 1 eingreifen. Die elastischen Elemente 7, welche in die beabstandeten Bohrungen 4 der Seitenwände 3 eingreifen, bewirken während des Transports des auf der Tragplatte 1 angeordneten Speicherlaufwerks 2 eine sehr gute Dämpfung von Schwingungen und Stößen um eine Querachse 10 des Speicherlaufwerks 2, wobei die Kanten der Bohrungen 4 eine Kippbewegung des Speicherlaufwerks 2 um die Querachse 10 begrenzen. Zur Aufnahme und zum Befestigen der elastischen Elemente 7 weist das Speicherlaufwerk 2 an zwei gegenüberliegenden Seiten Haltewände 9 auf, die jeweils korrespondierend zu den Fahnen 5 abgewinkelt sind.

## Patentansprüche

1. Anordnung mit einer im Wesentlichen quaderförmigen schwingungs- und/oder stoßempfindlichen Komponente (2) und einer Tragplatte (1) zur Aufnahme und Halterung der Komponente (2), **dadurch gekennzeichnet,**
- **dass** die Tragplatte (1) an zwei gegenüberliegenden im Wesentlichen senkrecht zur Tragplatte (1) angeordneten Seitenwänden (3) jeweils zwei horizontal beabstandete Bohrungen (4) aufweist,
- **dass** die Tragplatte (1) ferner an ihren Ecken im Wesentlichen senkrecht zur Tragplatte (1) angeordnete Fahnen (5) aufweist, die jeweils mit einer weiteren Bohrung (6) versehen sind, wobei jede Fahne (5) mit einer der Seitenwände (3), die an die jeweilige Fahne (5) angrenzt, einen Winkel bildet,
- **dass** an der Komponente (2) elastische Elemente (7) derart angeordnet sind, dass diese in die Bohrungen (4, 6) eingreifen.

2. Anordnung nach Anspruch 1, **dadurch gekennzeichnet, dass** die Komponente (2) mit zwei gegenüberliegenden Haltewänden (9) versehen ist, die jeweils korrespondierend zu den Fahnen (5) abgewinkelt und zum Befestigen elastischer Elemente (7) vorgesehen sind.

3. Anordnung nach Anspruch 1 oder 2, **dadurch gekennzeichnet, dass** die Winkel jeweils 45 Grad betragen.

## Claims

1. Arrangement having a substantially cuboidal vibration- and for impact-sensitive component (2) and a support plate (1) for receiving and holding the component (2), **characterized**
- **in that** the support plate (1) has in each case two horizontally spaced-apart bores (4) on two opposite side walls (3) arranged substantially perpendicularly to the support plate (1),
- **in that** the support plate (1) also has at its corners lugs (5) which are arranged substantially perpendicularly to the support plate (1) and which are each provided with a further bore (6), wherein each lug (5) forms an angle with one of the side walls (3) which adjoins the respective lug (5),
- **in that** elastic elements (7) are arranged on the component (2) such that said elastic elements (7) engage in the bores (4, 6).

2. Arrangement according to Claim 1, **characterized in that** the component (2) is provided with two opposite retaining walls (9) which are each angled in a manner corresponding to the lugs (5) and are provided for fastening elastic elements (7).

3. Arrangement according to Claim 1 or 2, **characterized in that** the angles are each 45 degrees.

## Revendications

1. Agencement comprenant un composant ( 2 ) sensiblement carré et sensible aux oscillations et/ou aux chocs et une plaque ( 1 ) support de réception et de maintien du composant ( 2 ), **caractérisé**
- **en ce que** la plaque ( 1 ) support a, sur deux parois ( 3 ) latérales opposées et sensiblement perpendiculaires à la plaque ( 1 ) support, respectivement deux trous ( 4 ) à distance horizontalement,
- **en ce que** la plaque ( 1 ) support a, en outre, en ses sommets des talons ( 5 ) sensiblement perpendiculaires à la plaque ( 1 ) support et munis respectivement d'un autre trou ( 6 ), chaque talon ( 5 ) faisant un angle avec l'une des parois ( 3 ) latérales, qui est voisine du talon ( 5 ) respectif,
- **en ce que** des éléments ( 7 ) élastiques sont disposés sur le composant ( 2 ) de manière à pénétrer dans les trous ( 4, 6 ).

2. Agencement suivant la revendication 1, **caractérisé en ce que** le composant ( 2 ) est pourvu de deux parois ( 9 ) opposées de maintien, qui sont coudées de manière correspondantes respectivement aux talons ( 5 ) et qui sont prévues pour la fixation d'éléments ( 7 ) élastiques.

3. Agencement suivant la revendication 1 ou 2, **caractérisé en ce que** les angles sont respectivement de 45°.
